# EUROPÄISCHE PATENTANMELDUNG

(11) **EP 0 875 712 A2**
(43) Veröffentlichungstag der Anmeldung: **04.11.1998**
(21) Anmeldenummer: 98105712.8
(22) Anmeldetag: 28.03.1998
(51) Int. Cl.: F16L 51/02, F01N 7/18

(54) **Agraffschlauch für Abgasanlagen**

(30) Priorität: 30.04.1997 DE 29707779 U
(71) Anmelder: Witzenmann GmbH Metallschlauch-Fabrik Pforzheim, D-75175 Pforzheim (DE)
(72) Erfinder: Burkhardt, Carlo Dr.,, 75331 Grunbach (DE)
(74) Vertreter: Blumenröhr, Dietrich

(57) **Zusammenfassung**

Agraffschlauch aus Metall für Abgasanlagen von Kraftfahrzeugen, schraubengangförmig gewickelt aus wenigstens einem S-förmig vorgeformten, ein- oder mehrlagigen Metallband, wobei die Bandkanten benachbarter Bandwindungen miteinander verfalzt sind über ihre durch die S-Haken der Vorformung gebildeten Schenkel und endständigen Falzborde, und wobei das Band im Bereich der Falzborde und/oder Schenke wenigstens einseitig mit einer Beschichtung versehen ist.

## Beschreibung

Die Erfindung betrifft einen Agraffschlauch aus Metall für Abgasanlagen von Kraftfahrzeugen, schraubengangförmig gewickelt aus wenigstens einem S-förmig vorgeformten, ein- oder mehrlagigen Metallband, wobei die Bandkanten benachbarter Bandwindungen miteinander verfalzt sind über ihre durch die S-Haken der Vorformung gebildeten Schenke und endständigen Falzborde.

Derartige Agraffschläuche werden üblicherweise dort in Abgasleitungen von Kraftfahrzeugen eingesetzt, wo bewegliche Leitungselemente erforderlich sind, die darüber hinaus auch ein hohes Maß an Dichtigkeit und eine geringe Schallabstrahlung aufweisen müssen. An sich stehen diese Anforderungen zueinander im Widerspruch, da eine gute Dichtigkeit und geringe Schallabstrahlung ein festes Wickeln des Agraffschlauches erforderlich machen, durch welches jedoch die Beweglichkeit stark eingeschränkt wird. Des weiteren wird die Beweglichkeit des Agraffschlauches dadurch beeinträchtigt, daß infolge der hohen, in der Abgasanlage auftretenden Temperaturen eine Wärmeversteifung des Schlauches auftritt, was seine Ursache vor allem in den im Material befindlichen Eigenspannungen hat, die beim Wickeln des Metallbandes entstehen. Diese Wärmeversteifung führt zu einer stark erhöhten gegenseitigen Reibung benachbarter Bandwindungen.

Um die geschilderten gegensätzlichen Anforderungen der Beweglichkeit bei gleichzeitiger Dichtigkeit zu erfüllen und außerdem die aufgrund von Wärmeversteifungen im Schlauch auftretenden Reibungen herabzusetzen wurde bereits vorgeschlagen, im Bereich des Falzes, also zwischen den Schenkeln bzw. Falzborden benachbarter Bandwindungen ein zusätzliches Band einzuwickeln. Dieses als Abstandselement fungierende Band besteht beispielsweise aus Chromnickelstahl und soll zum einen Dichtungsfunktionen erfüllen und zum anderen die Reibung benachbarter Bandwindungen reduzieren.

Neben der durch das zusätzliche Band erzeugten komplizierteren Agraffschlauchherstellung vergrößert sich durch dieses auch die Schlauchnennweite, was zu Einbauproblemen aufgrund der in Kraftfahrzeugen üblicherweise bestehenden beengten Einbauverhältnisse führt. Darüber hinaus weisen derartige mit einem zusätzlichen Band bestückten Agraffschläuche eine reduzierte Lebensdauer auf, da das Band Gefahr läuft, nach einer längeren Wechselbeanspruchung aus dem Falzbereich herauszurutschen, wodurch wiederum Undichtigkeiten und eine Beeinträchtigung der Beweglichkeit hervorgerufen werden können.

Hiervon ausgehend liegt der vorliegenen Neuerung die Aufgabe zugrunde, einen Agraffschlauch der eingangs geschilderten Art dahingehend zu verbessern, daß er unter Vermeidung der geschilderten Nachteile eines zusätzlich mit in den Schlauch eingewickelten Bandes dessen Vorteile erzielt, nämlich das Verbessern der Beweglichkeit auch über eine längere Lebensdauer unter Beibehaltung der Dichtheit.

Diese Aufgabe wird erfindungsgemäß dadurch gelöst, daß das Band im Bereich der Falzborde und/oder Schenke wenigstens einseitig mit einer Beschichtung versehen ist. In diesem Falzbereich, in dem die endständigen Falzborde bei S-förmiger Profilierung und entsprechender Wicklung an jeweils einem Schenke und einem Falzbord der benachbarten Bandwindung anlegen, sorgt das Zwischenfügen einer fest mit dem Band verbundenen Beschichtung für eine dauerhafte und strapazierfähige Beabstandung der aneinander liegenden Bandbereiche.

Für die Position der Beschichtung ist es wesentlich, daß diese in den an die Bandkante einer benachbarten Bandwindung anliegenden Bereichen des Bandes angeordnet ist, wobei eine über die Bandkantenbereiche hinausgehende Beschichtung keinen weiteren positiven Einfluß auf die Beweglichkeit des Agraffschlauches hervorruft. An sich würde es zwar schon genügen, nur einen Berührungsbereich des Falzes, also etwa nur einen Falzbord, der an dem Schenkel der benachbarten Bandwindung anliegt, mit einer Beschichtung zu versehen. Jedoch ist es besonders vorteilhaft, wenn alle Berührungsbereiche - bei einem S-förmig profilierten Band also zumindest die drei Anlagebereiche, nämlich zwischen dem Schenkel der ersten Bandwindung und dem Falzbord der zweiten Bandwindung, zwischen der Rückseite des Falzbordes der zweiten Bandwindung und dem Falzbord der ersten Bandwindung sowie zwischen der Rückseite des Falzbordes der ersten Bandwindung und dem Schenkel der Zweiten Bandwindung - eine Beschichtung aufweisen, die in diesem Fall auch nur auf einer an dem Berührungsbereich angrenzende Komponente aufgetragen sein muß.

Somit kann es ausreichend sein, nur die Falzborde mit einer Beschichtung zu versehen, da hierdurch auch der an einen Falzbord angrenzende Schenkel der benachbarten Bandwindung von dessen Bandmaterial beabstandet wird. Insgesamt sind folglich innerhalb eines Falzes drei Beschichtungen ausreichend und erforderlich, um eine direkte Anlage benachbarter Bandbereiche zu verhindern.

Demnach ist es zum einen sinnvoll, die Beschichtung an der Ober- und Unterseite einer Bandkante anzuordnen; zum anderen kann es sich aber auch empfehlen, die Beschichtung an beiden Bandkanten des Bandes vorzusehen. Darüber hinaus kann die Beschichtung einer Bandkante in zwei parallel zueinander verlaufenden Reihen erfolgen, nämlich im Bereich der später durch die Profilierung gebildeten Schenkel und Falzborde.

Was das Material der Beschichtung betrifft, so empfiehlt sich hierfür ein die Gleiteigenschaften der aneinanderliegenden Bandbereiche verbesserndes Material, das darüber hinaus für herkömmliche Beschichtungsverfahren geeignet und dauerhaft auf das Metallband aufbringbar sein soll. Besonders vorteilhaft ist in diesem Zusammenhang eine Kupferlegierung, da bei dem vorliegenden Anwendungsfall für Abgasanlagen die Beschichtung sehr hohen Temperaturen ausgesetzt ist, wobei diese hohen Temperaturen nicht zu einer Verschlechterung der Gleit- und Dichtungseigenschaften des Beschichtungsmaterials führen dürfen. Gleichzeitig sollte die Beschichtung auch verschleißfest ausgeführt sein, um die Langlebigkeit des hiermit versehenen Agraffschlauches zu gewährleisten.

Für das Herstellen und Aufbringen der Beschichtung empfehlen sich alle herkömmlichen Beschichtungsverfahren wie insbesondere Aufspritzen, Galvanisieren, Sputtern, PVD/CVD, Laserbeschichten, Pulverbeschichten etc.

Zweckmäßigerweise liegt die Dicke der Beschichtung im Mikrometerbereich, wodurch zum einen die Nennweite des Agraffschlauches nicht sonderlich durch die Beschichtung beeinflußt wird und die Beschichtung zum anderen in zuverlässigerweise die Gleit- und Dichteigenschaften erfüllen kann.

Schließlich kann es je nach Anwendungsfall auch zweckmäßig sein, das Metallband mit mehreren Beschichtungen zu versehen, die aus unterschiedlichen Materialien bestehen, wodurch beispielsweise eine Funktionentrennung der Beschichtung je nach Einsatzbereich, also beispielsweise in Bezug auf optimale Hitzebeständigkeit, Dichtheit oder Gleiteigenschaften möglich ist. Als Material insbesondere bei Anwendungen in niedrigeren Temperaturbereichen empfiehlt sich hierbei beispielsweise auch PTFE.

Weitere Merkmale und Vorteile der vorliegenden Erfindung ergeben sich aus der nachfolgenden Beschreibung von Ausführungsbeispielen anhand der Zeichnungen; hierbei zeigen
- Figur 1: einen erfindungsgemäßen Agraffschlauch in Seitenansicht, zum Teil in Axialschnitt;
- Figur 2: einen Ausschnitt eines erfindungsgemäßen Falzbereiches in geschnittener Vorderansicht und in Draufsicht;
- Figur 4: eine weitere Ausführungsform eines Metallbandes in geschnittener Vorderansicht und in Draufsicht; und
- Figur 5: eine zusätzliche Ausführungsform eines beschichteten Metallbandes in geschnittener Vorderansicht und Draufsicht.

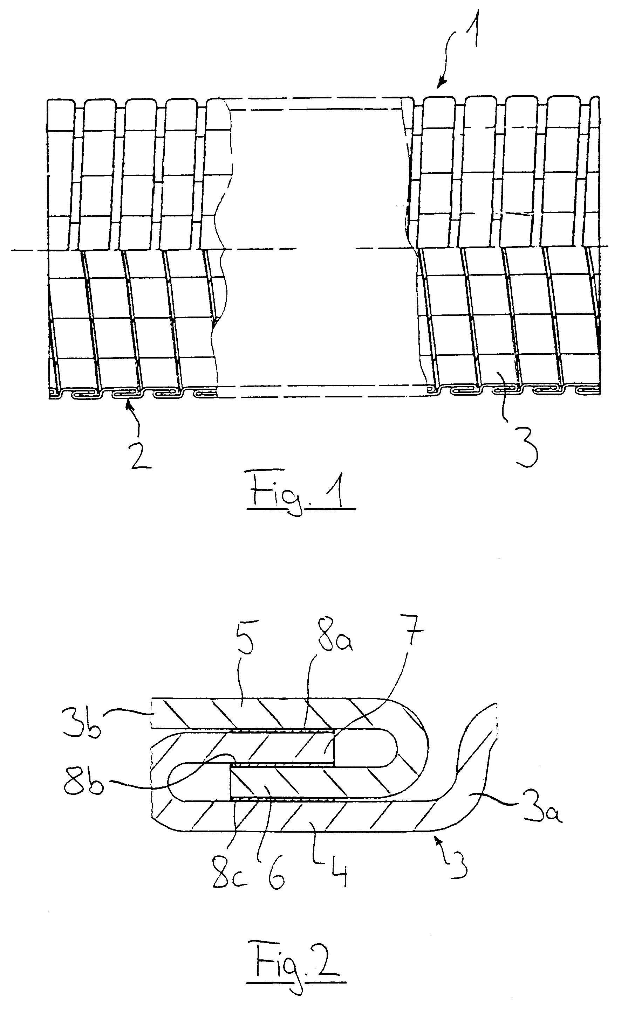

In Figur 1 ist ein Agraffschlauch 1 dargestellt, der aus einem S-förmig profilierten Metallband gewickelt ist. Die obere Hälfte von Figur 1 zeigt die Seitenansicht des Schlauches 1, während die untere Hälfte einen Axialschnitt bzw. eine Innenansicht des Agraffschlauches darstellt.

Der genaue Aufbau des erfindungsgemäßen Agraffschlauches läßt sich aus der ausschnittweisen Vergrößerung eines Falzes 2 des Agraffschlauches 1 in Figur 2 erkennen, wobei in jedem dieser Falze Zwei benachbarte Bandwindungen desselben Metallbandes 3 miteinander verfalzt sind. Die S-förmige Profilierung des Metallbandes läßt Schenkel 4, 5 auf der radialen Innen- bzw. Außenseite des Falzes sowie innerhalb des Falzes nach innen geschlagene endständige Falzborde 6 bzw. 7 entstehen. Durch das Verfalzen ist der endständige Falzbord 7 der ersten Bandwindung 3a zwischen den endständigen Falzbord 6 sowie den Schenkel 5 der benachbarten Bandwindung 3b eingeklemmt. In gleicher Weise ist der endständige Falzbord 6 der zweiten Bandwindung 3b zwischen den endständigen Falzbord 7 sowie den Schenkel 4 der ersten Bandwindung 3a eingeklemmt.

Um zu verhindern, daß die benachbarten Bandwindungen in direkten Kontakt aneinander gelangen, trägt die Bandwindung 3a eine Beschichtung 8a an seinem Falzbord 7 auf der in Figur 2 dargestellten Oberseite, während die benachbarte Bandwindung 3b - und somit auch das andere Ende des S-Hakens der Bandwindung 3a - an seinem Falzbord 6 beidseitig eine Beschichtung 8b bzw. 8c trägt.

Anstelle der Beschichtung 8c des Falzbordes 6 der zweiten Bandwindung 3b auf der Unterseite des Falzbordes könnte auch der Schenkel 4 der ersten Bandwindung 3a auf seiner dem Falzbord 6 zugewandten Oberseite beschichtet sein, wodurch sich der gleiche Beabstandungseffekt wie durch die Beschichtung 8c ergeben würde. Gleiches gilt für die Beschichtung 8a des Falzbordes 7 der ersten Bandwindung sowie für den Schenkel 5 der zweiten Bandwindung 3b in entsprechender Weise.

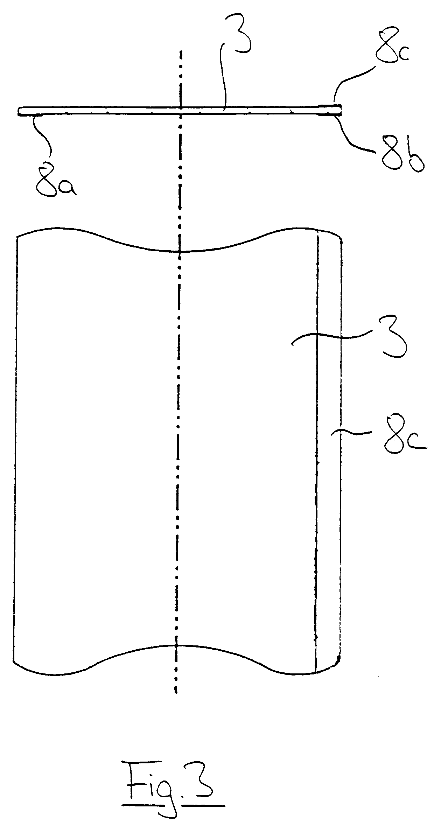

In Figur 3 ist ein Ausschnitt des Metallbandes 3 aus den Figuren 1 und 2 dargestellt, wobei im oberen Teil der Figur 3 das Band 3 in geschnittener Vorderansicht abgebildet ist und die Position der Beschichtungen 8a, 8b sowie 8c erkennen läßt. Die untere Hälfte der Darstellung zeigt das Band 3 in Draufsicht mit einer Beschichtung 8c auf der Oberseite der rechten Bandkante.

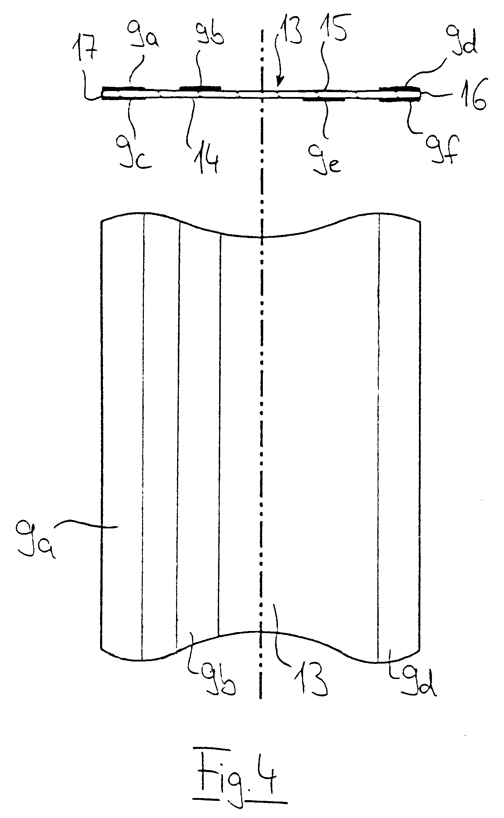

Figur 4 zeigt in ähnlicherweise eine alternative Ausführungsform eines Metallbandes 13 zur Herstellung einer weiteren Agraffschlauchvariante. Hierbei trägt das dargestellte, noch unprofilierte Metallband insgesamt sechs Beschichtungen 9a, 9b, 9c, 9d, 9e, 9f, wobei im Bereich der linken Bandkante auf der Oberseite die Beschichtung 9a am durch die spätere Profilierung gebildeten Falzbord 17 und die Beschichtung 9b an der Oberseite des Schenkels 14 angeordnet ist, während die auf der Unterseite des Bandes angeordnete Beschichtung 9c ebenfalls am späteren Falzbord 17 positioniert ist. Unterhalb der Beschichtung 9b des Schenkels 14 ist keine Beschichtung vorgesehen, da diese Seite des Schenkels keinen Berührungsbereich mit einer benachbarten Bandwindung darstellt, sondern die Schlauchaußenseite bildet.

In ähnlicherweise ist am späteren Falzbord 16 der rechten Bandkante an der Oberseite eine Beschichtung 9d und an der Unterseite eine Beschichtung 9f vorgesehen, während am späteren Schenkel 15 der rechten Bandkante an der Unterseite eine Beschichtung 9e angeordnet ist; an der Oberseite des Schenkels 15 ist keine Beschichtung vorgesehen, da dieser Bereich die Schlauchinnenseite bildet.

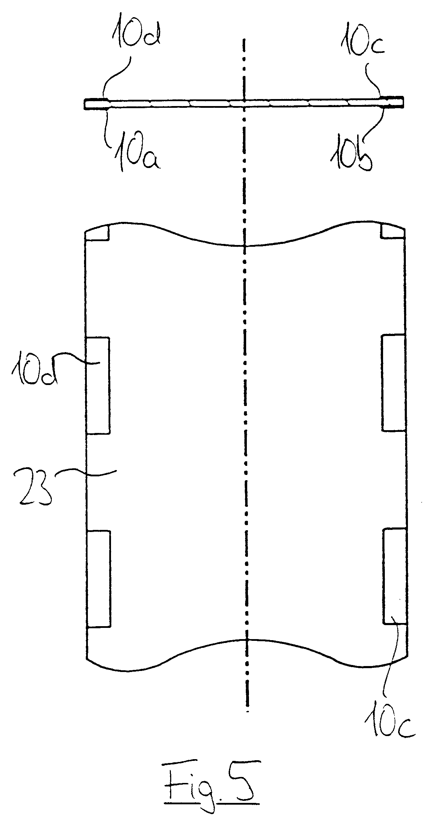

Schließlich zeigt Figur 5 ein Metallband 23, das an beiden Bandkanten sowohl auf der Ober- als auch auf der Unterseite mit einer Beschichtung 10a bis 10d versehen ist, die sich jedoch nicht über die gesamte Bandkantenlänge erstrecken, sondern sich mit unbeschichteten Bandbereichen abwechseln. Eine solche Art der Beschichtung empfiehlt sich beispielsweise zur Reduzierung der Herstellungskosten bei einem Agraffschlauch, der einen nicht komplett runden Querschnitt aufweist, sondern eine Vielzahl von Polygonkanten, die beim wendelförmigen Aufwickeln des Schlauches entstehen. Hierbei sind insbesondere die Polygonkanten kritisch, was die Beweglichkeit eines solchen Schlauches betrifft, da in diesen Polygonkanten der jeweilige Falz am stärksten zusammengedrückt ist, wodurch verständlicherweise die Reibung benachbarter Bandwindungen erhöht wird. Somit muß die Beschichtung nur im Bereich der Polygonkanten angeordnet sein, während der restliche Bandkantenbereich unbeschichtet bleiben kann.

Zusammenfassend wird durch die vorliegende Erfindung ein Agraffschlauch zur Anwendung in Abgasanlagen zur Verfügung gestellt, der sich durch eine hohe Lebensdauer, eine vereinfachte Herstellung sowie eine reduzierte Nennweite auszeichnet.

## Patentansprüche

1. Agraffschlauch aus Metall für Abgasanlagen von Kraftfahrzeugen, schraubengangförmig gewickelt aus wenigstens einem S-förmig vorgeformten ein- oder mehrlagigen Metallband, wobei die Bandkanten benachbarter Bandwindungen miteinander verfaltzt sind über ihre durch die S-Haken der Vorformung gebildeten Schenkel und endständigen Falzborde,
dadurch gekennzeichnet,
daß das Band (3, 13, 23) im Bereich der Falzborde (6, 7, 16, 17) und/oder Schenkel (4, 5, 14, 15) wenigstens einseitig mit einer Beschichtung (8a, 8b, 8c, 9a, 9b, 9c, 9d, 9e, 9f, 10a, 10b, 10c, 10d) versehen ist.

2. Agraffschlauch nach Anspruch 1,
dadurch gekennzeichnet,
daß die Beschichtung (8a bis 8c, 9a bis 9f, 10a bis 10d) nur in den an die Bandkante einer benachbarten Bandwindung (3b) anliegenden Bereichen des Bandes (3, 3a) angeordnet ist.

3. Agraffschlauch nach zumindest einem der vorstehenden Ansprüche,
dadurch gekennzeichnet,
daß die Beschichtung (8b, 8c, 9a, 9b, 9c, 9d, 9f, 10a bis 10d) an der Ober- und Unterseite der Bandkante angeordnet ist.

4. Agraffschlauch nach zumindest einem der vorstehenden Ansprüche,
dadurch gekennzeichnet,
daß die Beschichtung (8a bis 8c, 9a bis 9f, 10a bis 10d) an beiden Bandkanten des Bandes (3, 13, 23) angeordnet ist.

5. Agraffschlauch nach zumindest einem der vorstehenden Ansprüche,
dadurch gekennzeichnet,
daß die Beschichtung (8a bis 8c, 9a bis 9f, 10a bis 10d) aus einem die Gleiteigenschaften der aneinanderliegenden Bandbereiche verbessernden Material besteht.

6. Agraffschlauch nach zumindest einem der vorstehenden Ansprüche,
dadurch gekennzeichnet,
daß die Beschichtung galvanisch aufgebracht ist.

7. Agraffschlauch nach zumindest einem der vorstehenden Ansprüche,
dadurch gekennzeichnet,
daß die Beschichtung eine Dicke im Mikrometerbereich aufweist.

8. Agraffschlauch nach zumindest einem der vorstehenden Ansprüche,
dadurch gekennzeichnet,
daß die Beschichtung durch Aufspritzen, Sputtern, Physical Vapour Deposition, Chemical Vapour Deposition, Laserbeschichten oder Pulverbeschichten aufgebracht ist.

9. Agraffschlauch nach zumindest einem der vorstehenden Ansprüche,
dadurch gekennzeichnet,
daß das Band mit mehreren Beschichtungen versehen ist, die aus unterschiedlichen Materialien bestehen.

10. Agraffschlauch nach zumindest einem der vorstehenden Ansprüche,
dadurch gekennzeichnet,
daß die Beschichtung aus einer Cu-Legierung besteht.
